(19) Europäisches Patentamt

European Patent Office

Office européen des brevets

(11) EP 0 728 779 B1

(12) EUROPEAN PATENT SPECIFICATION

(45) Date of publication and mention
of the grant of the patent:
**25.07.2001 Bulletin 2001/30**

(51) Int Cl.[7]: **C08F 285/00**, C08F 2/22

(21) Application number: **96400368.5**

(22) Date of filing: **22.02.1996**

(54) **Aqueous polymer dispersions**

Wässrige Polymerdispersionen

Dispersions aqueuses de polymères

(84) Designated Contracting States:
**AT BE CH DE DK ES FR GB GR IE IT LI LU NL PT SE**

(30) Priority: **23.02.1995 GB 9503635**

(43) Date of publication of application:
**28.08.1996 Bulletin 1996/35**

(73) Proprietor: **CRAY VALLEY LIMITED**
**Machen, Newport, Gwent NP1 8YN (GB)**

(72) Inventors:
• **Guerin, Patrick**
**D-40670 Meerbusch, Strump (DE)**
• **Chapman, Sarah**
**Cardiff, South Glamorgan CF5 1PQ (GB)**

(74) Representative: **Chaillot, Geneviève**
**Cabinet CHAILLOT,**
**16-20, avenue de L'Agent Sarre,**
**B.P. 74**
**92703 Colombes Cédex (FR)**

(56) References cited:
**EP-A- 0 096 412**　　　　**EP-A- 0 566 295**
**US-A- 4 508 875**

## Description

This invention relates to aqueous polymer dispersions, the preparation thereof and to compositions, especially paint compositions, containing them.

It is an object of the present invention to provide aqueous polymer dispersions which are particularly suitable for use as binder components of aqueous surface coating compositions.

It is particularly one object of the invention to provide aqueous polymer dispersions useful for the manufacture of aqueous coating compositions such as paints, lacquers, inks or floor polishes for application to substrates such as plastics, concrete, wood and paper; especially composition for application to wood or for use as solventless masonry paints.

According to a first embodiment of the invention, therefore, there is provided an aqueous polymer dispersion containing polymer particles formed of three polymers and prepared by a multi-stage emulsion polymerization process, the polymer particles of the dispersion having a minimum film-forming temperature below 40°C and being formed of three different addition polymers, namely :

- polymer A having a glass transition temperature ($T_{gA}$) of from -70°C to 0°C and forming from 5 to 70% by weight of the total polymer ;
- polymer B having a glass transition temperature ($T_{gB}$) of from 1 to 40°C and forming from 5 to 70% by weight of the total polymer ; and
- polymer C having a glass transition temperature ($T_{gC}$) of from 41 to 150°C and forming from 5 to 70% by weight of the total polymer,

the total polymer representing 100%.

The glass transition temperatures of the polymers of the dispersion may be calculated using the Fox equation [T.G Fox, Bull. Am. Physics Soc., Vol. 1 (3), page 123 (1956)] and may, in practice be measured by programmed differential calorimetry.

The multistage polymers of the invention are prepared by successive emulsion polymerization stages and, hereinafter, the polymer produced in the first stage will be referred as the "first polymer", that in the second stage as the "second" polymer, and that in the third stage as the "third" polymer. The first stage polymer may comprise any of polymers A, B or C, as may the second and third stage polymers provided that all individual polymers are present. Each polymerization stage leading to the formation of a particular polymer may in itself comprise one or more polymerization steps, provided that each step produces polymer having the same Tg. Thus, for example, when using a concentration seeding procedure, the first polymer may be produced by a first step producing such polymer followed by a second step, using the same monomer composition, to provide additional polymer.

Each of the polymers making up the aqueous dispersion according to the invention is prepared by polymerization of at least one ethylenically unsaturated monomer, using a monomer composition which makes it possible to attain the desired glass transition temperature. Ethylenically unsaturated monomers which can be used include, for example, esters of acrylic acid or methacrylic acid, such as methyl acrylate, ethyl acrylate, n-butyl acrylate, 2-ethylhexyl acrylate, methyl methacrylate and n-butyl methacrylate; and aromatic vinyl monomers such as styrene and its derivatives, for examples alpha-methyl styrene, vinyl toluene and tert-butyl styrene. The monomers forming the first polymer may be identical to or different from those forming the succeeding polymers. Particular preference is given to using butyl acrylate, methylmethacylate and styrene.

Each polymer making up the aqueous dispersion according to the invention may optionally comprise up to 10 parts by weight of at least one water-soluble comonomer, which is copolymerizable with the ethylenically unsaturated monomers, per 100 parts by weight of the said monomers. As water-soluble comonomers which can be used it is possible to mention, in particular, acrylid acid, methacrylic acid, acrylamide, N-methylol-acrylamide, and N-methylolmethacrylamide.

Similarly, each constituent polymer of the dispersion may contain up to 5 parts by weight, per 100 parts by weight of the monomers, of at least one crosslinking monomer. Typically, these monomers crosslink during polymer formation without requirement of subsequent drying or other curing techniques.

Particular examples are ethylene glycol diacrylate, ethylene glycol dimethacrylate, 1,3-butylene glycol diacrylate and divinyl benzene.

Similarly, each constituent polymer of the dispersion may contain up to 15 parts by weight, per 100 parts by weight of the monomers, of at least one functionnal copolymerisable monomer, which is not a water soluble monomer, able with a specific functionnal group to improve film properties for instance such as adhesion or crosslinkable and grafting ability. Examples of functional groups and related monomers able to improve adhesion on substrates, include amine group-containing groups such as oxazolidine groups in for example, oxazolidinylethyl methacrylate and acetoacetyl group in for example acetoacetoxyethyl methacrylate.

As functional groups and related monomers able to improve crosslinking and grafting ability, it is possible to mention, in particular, hydroxyl group in for example hydroxy ethyl methacrylate ; unsaturated group in for example dicyclopentadienyl methacrylate, allyl methacrylate and allyl acrylate ; epoxy group in for example glycidyl methacrylate ; acetoacetyl group in for example acetoacetoxymethyl methacrylate ; and amine group in for example N-(isobutoxymethyl)acrylamide or a 2-tert butylamino ethyl methacrylate.

Grafting and crosslinking reactions can take place in the latex, during latex coalescence or film ageing. Specific conditions such as temperature, UV curing, pH, external reagents or catalyst, may be required.

Similary, each constituent polymer may contain a grafted photoinitiator group. This grafted photoinitiator group may be obtained for example by using up to ten parts by weight of a benzophenone functionalized monomer such as UVECRYL p 36 (Radcine Specialities S.A., Belgium).

In addition, it is possible that one at least of these three types of monomers (water-soluble, functional and crosslinking) is not incorporated uniformly into one at least of the constituent polymers but it may be added over a limited period of time during the polymerisation of monomers of one step in an appropriately higher concentration (e. g. up to 90%). This process is known as a "shot process".

According to the preferred embodiments of the present invention :

- the glass transition temperature of polymer A is from -35 to 0°C ;
- the glass transition temperature of polymer B is from 5°C to 35°C ; and
- the glass transition temperature of polymer C is from 60 to 135°C.

The minimum film-forming temperature of the polymer particles as a whole is less than 40°C. The minimum film-forming transition (MFFT or MFT) may be defined as the minimum temperature at which the particles of a polymer dispersion coalesce to form a continuous, crack free film. Where the polymer of the dispersion has an MFT of 5°C or less it may be used to formulate coating compositions containing no coalescing agent ; when the MFT is from 5 to 40°C, a coalescing agent will generally be necessary.

The polymer dispersion of the invention preferably has a particle size of from 50 to 250 nm.

Methods of measuring and controlling the average particle size are well known in the art, for example as described by E.A. Collins, 18th Annual Short Course (June 1987) of the Institute of Polymer Emulsion, Lehigh University (Pennsylvania) ; by E.A. Collins, J.A. Davidson and C.A. Daniels, J. Paint Technology $\underline{47}$, 35 (1975) or using the operating principles of the AutoSizer Lo-C apparatus from Malvern Instruments.

For the control of the morphology of the multidomain particle, it may be convenient to use well-known processes by controlling the level of nonpolymerised monomer swelling the particles. For example, one such process comprises the control of the feeding time of monomers in the different steps to control accumulation of nonpolymerised monomer during the polymerization. Thus, the system is "starved" (no monomer accumulation) or "flooded" (monomer accumulation). Another process comprises standing the following monomer adding step only when the monomer conversion of the prior step has reached a suitable conversion (between 60% and 99,9%). Another process involves the use of crosslinking monomer in a step to decrease the ability of the resulting polymer to be swollen by the monomer adding during the following step.

As noted above, aqueous polymer dispersions in accordance with the invention are prepared by a multi-stage polymerization process using, in each stage, a combination of monomers adapted to give the desired Tg characteristics to the polymer produced. It is often convenient to carry out the first polymerization stage in two steps. The first step comprises the polymerization of 1 to 20% of monomers and is followed by further polymerization of the remaining monomers. Such a process, a seeding procedure comprises the control of particle size distribution and average particle size.

The polymerization can be carried out in the presence of up to approximately 1 part by weight, per 100 parts by weight of the monomers, of at least one chain transfer agent, in order to regulate the number-average molecular weight of the resulting polymer. Examples of compounds which can be used as chain transfer agents include mercaptocarboxylic acids and mercaptothiols having from 2 to 8 carbon atoms and their esters, such as mercaptoacetic acid, 2-mercaptobenzoic acid, 2-mercaptoethanol and 3-mercapto-2-butanol ; and alkyl or alkylaryl thiols such as butanethiol, dodecylmercaptan and 2-methyl-5-tert.butyl thiophenol. Preferably there will be used a mercaptomonocarboxylic acid and/or a mercapto-dicarboxylic acid having from 2 to 8 carbon atoms and their esters, such as mercaptoacetic acid, 2-mercaptopropionic acid, 3-mercaptopropionic acid, 2-mercaptobenzoic acid, mercaptosuccinic acid or mercaptoisophthalic acid and alkyl esters of such acids. Particularly preferred chain transfer agents are mercaptomonocarboxylic acid and/or mercaptodicarboxylic acids having from 2 to 6 carbon atoms, more particularly a mercaptopropionic acid or alkyl esters thereof, specifically the isooctyl or n-dodecyl esters of mercaptopropionic acid.

The ethylenically unsaturated monomers constituting each polymer of the dispersion may be emulsified by means of at least one anionic or nonionic surfactant, or may simply be introduced into a reactor in the form of a homogeneous mixture of monomers. In the latter case, an aqueous solution of one or more surfactants may be added simultaneously. It is preferable to use a combination of nonionic surfactant and anionic surfactant in order to prepare emulsions. Examples of nonionic surfactants include polyethers such as condensates of ethylene oxide and propylene oxide, alkyl and alkylaryl ethers and thioethers of polyethylene glycols and polypropylene glycols, alkylphenoxypoly (ethylenoxy)ethanols, polyoxyalkylene derivatives of partial esters of long-chain fatty acids such as lauric, myristic, palmitic and oleic acids, condensates of ethylene oxide with higher alkanethiols, ethylene oxide derivatives of long-chain carboxylic acids and of alcohols, etc. These nonionic surfactants preferably contain approximately 5 to 100 ethylene oxide units per molecule and, more preferably, approximately 20 to 50 of such units. Examples of anionic surfactants which can be used, preferably in combination with the nonionic surfactants, include high molecular weight sulphates and sulphonates for example alkyl, aryl and alkylaryl sulphates and alkyl-, aryl- and alkylarylsulphonates of sodium and potassium, such as sodium 2-ethylhexyl sulphate, potassium 2-ethylhexyl sulphate, sodium nonyl sulphate, sodium undecyl sulphate, sodium tridecyl sulphate, sodium pentadecyl sulphate, sodium lauryl sulphate, sodium methylbenzenesulphonate, potassium methylbenzenesulphonate, potassium toluenesulphonate and sodium xylenesulphonate, the sulphonated derivatives of the nonionic surfactants listed above ; dialkyl esters of alkali metal salts of sulphosuccinic acid, such as sodium diamylsulphosuccinate ; and condensation products of formaldehyde/naphthalenesulphonic acid. The total quantity of surfactants used in the emulsion polymerization process varies from approximately 2 to 20% by weight, preferably approximately from 4 to 12% by weight, of the monomeric components. The weight ratio of anionic surfactant to nonionic surfactant should be between 0.01 and 1 approximately, preferably between approximately 0.05 and 0.5. The quantity of water used in the reaction medium is, in general, determined by the solids content desired in the aqueous dispersion according to the invention, which is generally between approximately 40% and 70%, preferably between 45 and 60% by weight.

The monomeric components of the dispersion are polymerized by means of effective quantities, preferably between 0.1 and 2%, approximately, by weight of the total charge of monomers, of at least one conventional free-radical initiator. Such an initiator is preferably substantially soluble in water. Such initiators comprise inorganic peroxides such as hydrogen peroxide and persulfates salts, organic peroxides such as tertio-butyl hydroperoxide, azo compounds such as azo bis isobutyronitrile derivatives with carboxy or hydroxy groups, and redox system such as for example combinations of persulfate salt and alkali metal bisulphite.

The polymerization temperature required to produce the aqueous polymers in each of the steps of the process is generally within a range from approximately 40 to 95°C - preferably from approximately 55 to 85°C - depending on the time envisaged for the polymerization. The polymerization time is generally from approximately 45 minutes to 6 hours for each of the two steps, this time increases as the polymerization temperature decreases.

In order to attain a final degree of conversion in the polymerization reaction of 100%, it may be desirable to follow the final step by cooking the aqueous polymer emulsion for approximately 30 to 90 minutes at a temperature which is higher, preferably by at least 9°C, than the polymerization temperature.

A complementary improvement of steps consists in the treatment of the aqueous polymer emulsion, after the final step or, if appropriate, after the cooking step, by means of a free-radical initiation system which has a short half-life at the temperature under consideration, in order to attain an overall degree of conversion which is close to 100% and/or a residual monomer content which does not exceed approximately 50 ppm. As examples of free-radical initiator systems it is possible to mention organic and inorganic peroxides such as tert-butyl hydroperoxide, butyl peroxide, hydrogen peroxide or alkali metal persulphates, in combination with a reducing agent such as sodium formaldehydesulphoxylate, ascorbic acid, Mohr's salt, etc. Such a treatment may be carried out at temperatures from 40°C to 90°C, approximately, its duration depending on the chosen temperature and being preferably between 15 minutes and 3 hours, approximately.

If the latex prepared in conformity with the present invention appears too acid for the formulation of paints, it may be desirable to adjust its pH to a value of greater than 6, for example by means of any alkaline substance such as hydroxide of sodium, potassium or ammonium ; or an organic amine such as triethanolamine.

Seeded polymerization is preferred for the first stage of the polymerization.

The present invention further provides a paint comprising an aqueous polymer emulsion as defined described above.

The formulation method employed may be any one of those known in the art of formulating latex paints. Essentially, the aqueous paints according to the invention comprise a mixture of colouring agents, e.g. pigment and latex. Powdered filler may also be present.

Examples of powdered fillers include calcium carbonate, dolomite, talc, mica, barium sulphate, lime and cement ; and examples of pigments include titanium oxide, carbon black, copper phthalocyanine, zinc oxide, iron oxides and chromium oxide.

The amounts of pigments will depend upon various factors including the depth of colour desired, the hiding power, etc. In general, the aqueous paints of the invention will contain pigments in volume concentrations of from 20% to 95% ; e.g. from 70 to 95% for matt paints, and from 20 to 40% for semi-gloss paints.

In addition to the pigments and fillers the coating compositions of the invention may contain other adjuvants such as dispersants [alkali metal silicates (especially metasilicates), alkali metal polyphosphates and alkali metal salts of organic polyacids (especially polyacrylates)] ; wetting agents, [e.g. nonionic surfactants (for example polyether oxides)] ; rheology modifiers or thickeners (e.g. water-soluble polymers modified by hydrophobic groups and hydroxyalkylcellulose derivatives) ; antifoam agents ; biocides and anticorrosive agents.

The aqueous paints of the present invention may be applied to the surface of a wall or to any other substrate by conventional means, for example brush, roller, spray-gun, etc. The paint may be crosslinked or dried after application to the substrate, likewise by conventional means, for example drying in air, baking, etc. The coat of paint, crosslinked or otherwise, has excellent performance characteristics as regards resistance to yellowing, absence of cracking at low temperature and of any tacky or sticky nature, and coalescence at low temperature.

In order that the invention may be well understood the following Examples are given by way of illustration only.

In the Examples all parts and percentages are by weight unless otherwise stated.

The blocking resistance of formulations was evaluated by a test method based on ASTM blocking resistance test D4946.

The test solution is applied to sealed card using a 0.004 gap bar applicator. The applied panels are conditioned at room temperature for 1 hr, 24 hrs and 7 days before testing.

Dried emulsion films are placed face-to-face and a pressure of about 127 g/M is applied. These paint films are either left at room temperature, or put into an oven at 50°C, to make the test more stringent. After cooling, the blocked panels are peeled apart. The degree of blocking is rated subjectively for tack or seal using series of standard descriptive terms corresponding to numerical ASTM values 10-0.

| Blocking resistance Numerical Ratings | Type of separation | Performance |
| --- | --- | --- |
| 10 | no tack | perfect |
| 9 | trace tack | excellent |
| 8 | very slight tack | very good |
| 7 | very slight to slight tack | good to very good |
| 6 | slight tack | good |
| 5 | moderate tack | fair |
| 4 | very tacky ; no seal | poor to fair |
| 3 | 5 to 25% seal | poor |
| 2 | 25 to 50% seal | poor |
| 1 | 50 to 75% seal | very poor |
| 0 | 75 to 100% seal | very poor |
| Note : Numerical values may differ from operator to operator but relative ranking should be the same. The repeatability is estimated to be plus or minus one blocking unit. | | |

The cracking of film was evaluated after application with hand coater on glass panel of a 100 μm wet coating film and film formation at 8°C during 8 hours. The cracking is evaluated on a scale from 10 to 0, i.e. no cracking, value 10 to large cracks, value 0 in the resulting film.

Exemples 1-7 - Wood finishing formulations

Seven polymer emulsions were prepared by multistage polymerization, using three pre-emulsions having the following formulations :

Pre-emulsion 1 (Polymer 1)

$X_1/2$ parts water
$X_1/10$ parts aqueous solution of 15% Sodium
Dodecyl Sulphate
$X_1$ parts monomers

Pre-emulsion 2 (Polymer 2)

X$_2$/2 parts water
X$_2$/10 parts aqueous solution of 15% Sodium
Dodecyl Sulphate
X$_2$ parts monomers

Pre-emulsion 3 (Polymer 3)

X$_3$/2 parts water
X$_3$/10 parts aqueous solution of 15% Sodium
Dodecyl Sulphate
X$_3$ parts monomers

[The sum of X$_1$, X$_2$ and X$_3$ is 100 parts].

The emulsion was prepared by the following general process.

1) An initial charge containing 41,4 parts water and 1.5 parts aqueous solution of 15% Sodium Dodecyl Sulphate was put into a reactor and heated to 85°C.

2) Once the initial charge had reached 85°C, the initial initiator solution (0.19 parts water and 0.05 parts sodium persulphate was added and simultaneous feedings of

(a) pre-emulsion (feeding time : 1 hour), and
(b) the initiator solution (20 water and 0.4 parts sodium persulphate ; feeding time - 3 hours) were started maintaining a constant reactor temperature of 85°C, +/-1°C.

3) At the end of the pre-emulsion 1 feed, the addition of the second feed of pre-emulsion 2 (feeding time : 1 hour) was started still maintaining a reaction temperature of 85°C.+/-1°C.

4) At the end of the pre-emulsion 2 feed, the addition of the third feed of pre-emulsion 3 (feeding time : 1 hour) was started still maintaining a reaction temperature of 85°C.+/-1°C.

5) At the end of the third pre-emulsion feed, pipes and tanks are rinsed with 4.5 parts of water and the reaction was maintained for 1 hour at 85°C.

6) Then, the reactor was cooled to below 40°C before starting the neutralising agent solution feed (feeding time 20 minutes) (1.18 parts water and 1.18 parts 25% ammonia).

The characteristics of the emulsions were :

solid content : 43-44%
pH 7.5-8.5

The composition and characteristics of the resin dispersion are given in Table I below.

TABLE I

| | Polymer 1 : C | | Polymer 2 : A | | Polymer 3 : B | | Size (nm) | MFFT (°C) |
|---|---|---|---|---|---|---|---|---|
| | composition (%) | Tg / % | composition (%) | Tg / % | composition (%) | Tg / % | | |
| *Example 1 | MMA 77.7<br>BA 19.8<br>MAA 2.5 | 70/44 | MMA 22.5<br>BA 75.0<br>MAA 2.5 | -11/55 | MMA 50.0<br>BA 47.5<br>MAA 2.5 | 21(**)/1 | 90 | 2 |
| Example 2 | MMA 77.7<br>BA 19.8<br>MAA 2.5 | 69/35 | MMA 22.5<br>BA 75.0<br>MAA 2.5 | -13/55 | MMA 50.0<br>BA 47.5<br>MAA 2.5 | 23/10 | 87 | 15 |
| *Example 3 | MMA 77.7<br>BA 19.8<br>MAA 2.5 | 72/10 | MMA 22.5<br>BA 75.0<br>MAA 2.5 | -12/83 | MMA 50.0<br>BA 47.5<br>MAA 2.5 | 20/7 | 95 | <0 |
| *Example 4 | MMA 77.7<br>BA 19.8<br>MAA 2.5 | 70/83 | MMA 22.5<br>BA 75.0<br>MAA 2.5 | -13(**)/10 | MMA 50.0<br>BA 47.5<br>MAA 2.5 | 21(**)/7 | 100 | 82 |
| Example 5 | MMA 97.5<br>BA 0.0<br>MAA 2.5 | 121/35 | MMA 22.5<br>BA 75.0<br>MAA 2.5 | -12/55 | MMA 43.5<br>BA 54.0<br>MAA 2.5 | 12(**)/10 | 92 | 17 |
| Example 6 | MMA 87.5<br>BA 0.0<br>AAEM 10.0<br>MAA 2.5 | 120/35 | MMA 20.2<br>BA 67.3<br>AAEM 10.0<br>MAA 2.5 | -10/55 | MMA 39.0<br>BA 48.5<br>AAEM 10.0<br>MAA 2.5 | 12(**)/10 | 93 | 17 |
| *Example 7 | MMA 97.5<br>BA 0.0<br>MAA 2.5 | 125/35 | MMA 22.5<br>BA 75.0<br>MAA 2.5 | -10/55 | MMA 65.0<br>BA 32.5<br>MAA 2.5 | 45/10 | 95 | 25 |

MMA  : Methyl Methacrylate
BA    : Butyl Acrylate
MAA  : Methacrylic Acid
AAEM : Aceto Acetoxy Ethyl Methacrylate

\* Comparative Example
\*\* Tg values calculated from Fox's relation. Other Tgs measured By DSC at a heating rate of 10°C per min.

EP 0 728 779 B1

Each of the dispersions was formulated to give a coating composition in accordance with the following formulation.

Table II

| Ingredients | Suppliers | Amounts |
|---|---|---|
| Emulsion 1->7 | | 84 |
| Foamex 815 | Troy Chemicals | 1.1 |
| Rheolate 278 | Rheox | 1.25 |
| Rheolate 255 | Rheox | 0.8 |
| Acticid SPX | Thor | 0.1 |
| AMP 90 | Angus | 0.1 |
| Butyldiglycol | Eastman | 1.6 |
| Propylglycol | Eastman | 2.5 |
| Water | | 8 .3 |

The blocking resistance and cracking of the formulation were evaluated. The results are shown in Table III.

Table III

| Drying Time | 1 hr RT | 24 hrs RT | 7 days RT | Cracking |
|---|---|---|---|---|
| Test Temperatue | RT/50°C | RT/50°C | RT/50°C | |
| Example 1 ∗ | 6/3 | 8/6 | 10/6 | 10 |
| Example 2 | 8/4 | 9/6 | 10/6 | 10 |
| Example 3 ∗ | 0/0 | 2/0 | 3/0 | 10 |
| Example 4 ∗ | ∗∗ | ∗∗ | ∗∗ | 0 |
| Example 5 | 8/5 | 8/7 | 10/7 | 10 |
| Example 6 | 8/5 | 10/6 | 10/8 | 10 |
| Example 7 ∗ | 7/5 | ∗∗ | ∗∗ | 5 |

∗ Comparative examples

∗∗ No data - film cracked.

Examples 8-19

Solventless semi-matt wall paints, styrene-acrylic polymers

A series of dispersions were produced using a seed polymerization step followed by three successive polymerization stages, the pre-emulsion in the second polymerization step having the same composition as pre-emulsion -1. The three pre-emulsions used have the following general formulations.

Pre-emulsion (Polymer 1)

X1/4 parts water
0.95 parts aqueous solution of 35% nonylphenol
ether (25EO) sulphate sodium
X1/4 parts aqueous solution of 25% nonylphenol
ether (25EO)
0.97 $X_1$ parts monomers (STY + BA)
0.025 $X_1$ parts AA

0.005 $X_1$ parts ACRYD

<u>Pre-emulsion</u> (Polymer 2)

X2/4 parts water
X2/4 parts aqueous solution of 25% nonylphenol
ether (25EO)
0.97 $X_2$ parts monomers (STY + BA)
0.025 $X_2$ parts AA
0.005 $X_2$ parts ACRYD

<u>Pre-emulsion 3</u> (monomer mixture (Polymer 3))

0.97 $X_3$ parts monomers (STY + BA)
0.025 $X_3$ parts AA
0.005 $X_3$ parts ACRYD

$$X_1 + X_2 + X_3 = 100$$

STY :     styrene
BA :      butyl acrylate
AA :      Acrylic Acid
ACRYD :  Acrylamide

The following general procedure was followed.

1) An initial charge containing 37.5 parts water and 0.85 parts aqueous solution of 35% sodium nonylphenol ethoxylated (25EO) sulphate salt was put into a reactor and heated up to 72°C.

2) Once the initial charge was reached 72°C, 7.5% of pre-emulsion 1 are added to the reactor. Then, a solution of sodium metabisulphite (0.5 part water and 0.1 part sodium metasulphite) and subsequently, the initial initiator solution (0.5 part water and 0.035 part ammonium persulphate) were added. After 10 minutes, the simultaneous feeding of

(a) the pre-emulsion 1 (feeding time : 1.5 hours), and

(b) the initiator solution (12 parts water and 0.3 parts
ammonium persulphate ; feeding time : 3.5 hours) were started maintaining a constant reactor temperature of 71°C +/-1°C.

3) At the end of the pre-emulsion 1 feed, the addition of the second feed of pre-emulsion 2 (feeding time : 2 hours) was started still maintaining a reaction temperature of 71°C +/-1°C.

4) At the end of the pre-emulsion 2 feed, the simultaneous addition of the feed of pre-emulsion 3 and a solution ($X_3$/4 parts water, $X_3$/4 parts aqueous solution of 25% nonylphenol ether (25EO) and 0.005 $X_3$ parts ACRYD) was started still maintaining a reaction temperature of 71°C +/-1°C (feeding time : 1 hour).

5) At the end of the third pre-emulsion feed, pipes and tanks were rinsed with 3.5 parts of water and the reaction was maintained for 1.5 hours at 80°C.

6) Then, the reactor was cooled to below 40°C before starting the neutralising agent solution feed with a 10% sodium hydroxide to reach pH = 8.5 (feeding time : 60 minutes) :

The polymer composition of the various dispersions are shown in Table IV below.

Table IV

| Composition (%)** | Polymer 1 | | Polymer 2 | | Polymer 3 | |
|---|---|---|---|---|---|---|
| | STY % | BA % | STY % | BA % | STY % | BA % |
| Examples 8, 9 and 10 | 52 | 48 | 9.4 | 90.6 | 74.6 | 25.4 |
| Example 11 | 74.6 | 25.4 | 24.2 | 75.8 | 9.4 | 90.6 |
| Example 12 | 74.6 | 25.4 | 52 | 48 | 9.4 | 90.6 |
| Example 13 | 74.6 | 25.4 | 74.6 | 25.4 | 9.4 | 90.6 |
| Example 14 | 9.4 | 90.6 | 65.5 | 34.5 | 100 | 0 |
| Example 15 | 100 | 0 | 9.4 | 90.6 | 65.5 | 34.5 |
| Example 16 | 65.5 | 34.5 | 100 | 0 | 9.4 | 90.6 |
| Example 17 | 9.4 | 90.6 | 100 | 0 | 65.5 | 34.5 |
| Example 18 | 100 | 0 | 65.5 | 34.5 | 9.4 | 90.6 |
| Example 19 | 65.5 | 34.5 | 9.4 | 90.6 | 100 | 0 |

** the total amount STY and BA is regarded as 100%

The dispersions were formulated into coating compositions in accordance with the following formulations :

| | |
|---|---|
| Water ..... | 100 parts |
| Dispersing agent (Hoechst-Dispex N40) ..... | 3 parts |
| Dispersing/softening agent (Murzing - Agitan 281) ..... | 3 parts |
| Biocide (Riedel de Hahn - Mergal K 10) ... | 1 part |
| Thickening agent (Culminal hec 30,000) ..... | 3 parts |
| $TiO_2$ (Kranos 2063) ..... | 200 parts |
| Calcium carbonate (Hydrocarb) ..... | 175 parts |
| Neutralizing Agent (25% NaOH solution) ..... | 1 part |
| Polymer dispersion ..... | 350 parts |

The formulations were elected from blocking resistance and cracking to give the results shown in Tables V, VI and VII.

Table Va

| Examples 8, 9, 10 : composition and Tg | | | | |
|---|---|---|---|---|
| Polymer | Composition | % STY | % BA | Tg (°C) |
| 1 | B | 52 | 48 | 22 |
| 2 | A | 9.4 | 90.6 | -30 |
| 3 | C | 74.6 | 25.4 | 45 |

Table Vb

| Examples 8, 9, 10 | | | | | | | |
|---|---|---|---|---|---|---|---|
| | Polymer 1 % / total polymer | Polymer 2 % / total polymer | Polymer 3 % / total polymer | Particle Size (nm) | MFFT (°C) | Cracking | Blocking |
| *Example 8 | 39 | 60 | 1 | 145 | <0 | 10 | 3 |

* = Comparative Example

Table Vb   (continued)

| | Polymer 1 % / total polymer | Polymer 2 % / total polymer | Polymer 3 % / total polymer | Particle Size (nm) | MFFT (°C) | Cracking | Blocking |
|---|---|---|---|---|---|---|---|
| | | | | | | | |

Examples 8, 9, 10

| | Polymer 1 % / total polymer | Polymer 2 % / total polymer | Polymer 3 % / total polymer | Particle Size (nm) | MFFT (°C) | Cracking | Blocking |
|---|---|---|---|---|---|---|---|
| Example 9 | 33 | 60 | 7 | 140 | <0 | 10 | 5 |
| Example 10 | 26 | 60 | 14 | 150 | <0 | 10 | 8 |

Table VIa-1

| Examples 11, 12, 13 : monomer composition | | |
|---|---|---|
| Composition | % STY | % BA |
| C | 74.6 | 25.4 |
| B1 | 74.6 | 25.4 |
| B2 | 52 | 48 |
| B3 | 24.2 | 75.8 |
| A | 9.4 | 90.6 |

Table VIa-2

| Examples 11, 12, 13 : composition of the polymer | |
|---|---|
| Polymer | % / total polymer |
| 1 | 40 |
| 2 | 20 |
| 3 | 40 |

Table VIb

| | Polymer 1 / Tg (°C) | Polymer 2 / Tg (°C) | Polymer 3 / Tg (°C) | Particle Size (nm) | MFFT (°C) | Cracking | Blocking |
|---|---|---|---|---|---|---|---|
| ∗Example 11 | C / 46 | B3 / -12 | A / -31 | 152 | <0 | 10 | 1 |
| Example 12 | C / 43 | B2 / 22 | A / -30 | 156 | <0 | 10 | 10 |
| ∗Example 13 | C / 45 | B1 / 45 | A / -32 | 150 | 4 | 5 | 10 |

∗ = Comparative Example

Table VIIa

| Examples 14-19 : composition and Tg for A, B, C | | | | |
|---|---|---|---|---|
| Composition | % STY | % BA | Tg (°C) | % / total polymer |
| A | 9.4 | 90.6 | -30 | 45 |
| B | 65.5 | 34.5 | 31 | 45 |
| C | 100 | 0 | 110 | 10 |

Table VIIb

| Examples | Polymer 1 / Tg (°C) | Polymer 2 / Tg (°C) | Polymer 3 / Tg (°C) | MFFT (°C) | Blocking | Cracking |
|---|---|---|---|---|---|---|
| Example 14 | A / -30 | B / 31 | C / 110 | <0 | 10 | 10 |
| Example 15 | C / 110 | A / -30 | B / 31 | <0 | 10 | 10 |
| Example 16 | B / 31 | C / 110 | A / -30 | <0 | 10 | 10 |
| Example 17 | A / -30 | C / 110 | B / 31 | <0 | 10 | 10 |
| Example 18 | C / 110 | B / 31 | A / -30 | <0 | 10 | 10 |
| Example 19 | B / 31 | A / -30 | C / 110 | <0 | 10 | 10 |

**Claims**

1. An aqueous polymer dispersion containing polymer particles formed of three polymer domains and prepared by a multi-stage emulsion polymerization process, the polymer particles of the dispersion having a minimum film-forming temperature (MFT) below 40°C and consisting of domain of three addition polymers, namely

   - polymer A having a glass transition temperature ($T_{gA}$) of from -70°C to 0°C and forming from 5 to 70% by weight of the total polymer ;
   - polymer B having a glass transition temperature ($T_{gB}$) of from 1 to 40°C and forming from 5 to 70% by weight of the total polymer ; and
   - polymer C having a glass transition temperature ($T_{gC}$) of from 41 to 150°C and forming from 5 to 70% by weight of the total polymer,

   the total polymer representing 100%.

2. A dispersion as claimed in claim 1, in which :

   - the glass transition temperature of polymer A is from -35 to 0°C ;
   - the glass transition temperature of polymer B is from 5°C to 35°C ; and
   - the glass transition temperature of polymer C is from 60 to 135°C.

3. A dispersion as claimed in claim 1 or claim 2 in which the polymer particles have an average size of from 50 to 250 nm.

4. A dispersion as claimed in anyone of claims 1 to 3 in which the addition polymers are polymers of one or more (meth)acrylate esters and/or vinyl aromatic hydrocarbons.

5. A dispersion as claimed in anyone of claims 1 to 4, the polymer of which has an MFT of 5°C or less.

6. A dispersion as claimed in anyone of claims 1 to 4, the polymer of which has an MFT of from 5 to 40°C.

7. A coating composition comprising a polymer dispersion containing polymer particles formed of three polymer domains and prepared by a multi-stage emulsion polymerization process, the polymer particles of the dispersion having a minimum film-forming temperature (MFT) below 40°C and consisting of domain of three addition polymers, namely

   - polymer A having a glass transition temperature ($T_{gA}$) of from -70°C to 0°C and forming from 5 to 70% by weight of the total polymer ;
   - polymer B having a glass transition temperature ($T_{gB}$) of from 1 to 40°C and forming from 5 to 70% by weight of the total polymer ; and
   - polymer C having a glass transition temperature ($T_{gC}$) of from 41 to 150°C and forming from 5 to 70% by weight of the total polymer,

the total polymer representing 100%.

8. A coating composition as claimed in claim 7, in which :

 - the glass transition temperature of polymer A is from -35 to 0°C ;
 - the glass transition temperature of polymer B is from 5°C to 35°C ; and
 - the glass transition temperature of polymer C is from 60 to 135°C.

9. A coating composition as claimed in claim 7 or claim 8, in which the polymer particles have an average size of from 50 to 250 nm.

10. A coating composition as claimed in anyone of claims 7 to 9 in which the addition polymers are polymers of one or more (meth)acrylate esters and/or vinyl aromatic hydrocarbons.

11. A coating composition as claimed in anyone of claims 7 to 10 in which the polymer of the dispersion has an MFT of 5°C or less.

12. A coating composition as claimed in anyone of claims 7 to 11 in which the polymer of the dispersion has an MFT of from 5 to 40°C and also contains a coalescing agent.


**Patentansprüche**

1. Wäßrige Polymerdispersion, enthaltend aus drei Polymerdomänen gebildete und nach einem mehrstufigen Emulsionspolymerisationsverfahren hergestellte Polymerteilchen, die eine Mindestfilmbildungstemperatur (MFT) unter 40°C aufweisen und aus Domänen von drei Additionspolymeren bestehen, nämlich

 - Polymer A, das eine Glasübergangstemperatur ($T_{gA}$) von -70°C bis 0°C aufweist und 5 bis 70 Gew.-% des gesamten Polymers ausmacht;
 - Polymer B, das eine Glasübergangstemperatur ($T_{gB}$) von 1 bis 40°C aufweist und 5 bis 70 Gew.-% des gesamten Polymers ausmacht; und
 - Polymer C, das eine Glasübergangstemperatur ($T_{gC}$) von 41 bis 150°C aufweist und 5 bis 70 Gew.-% des gesamten Polymers ausmacht,

wobei das gesamte Polymer 100% darstellt.

2. Dispersion nach Anpruch 1, in der:

 - die Glasübergangstemperatur des Polymers A -35 bis 0°C beträgt;
 - die Glasübergangstemperatur des Polymers B 5°C bis 35°C beträgt und
 - die Glasübergangstemperatur des Polymers C 60 bis 135°C beträgt.

3. Dispersion nach Anpruch 1 oder 2, in der die Polymerteilchen eine mittlere Größe von 50 bis 250 nm aufweisen.

4. Dispersion nach einem der Ansprüche 1 bis 3, in der es sich bei den Additionspolymeren um Polymere aus einem oder mehreren (Meth)acrylatestern und/oder vinylaromatischen Kohlenwasserstoffen handelt.

5. Dispersion nach einem der Ansprüche 1 bis 4, deren Polymer eine MFT von 5°C oder weniger aufweist.

6. Dispersion nach einem der Ansprüche 1 bis 4, deren Polymer eine MFT von 5°C bis 40°C aufweist.

7. Beschichtungszusammensetzung, enthaltend eine Polymerdispersion, enthaltend aus drei Polymerdomänen gebildete und nach einem mehrstufigen Emulsionspolymerisationsverfahren hergestellte Polymerteilchen, die eine Mindestfilmbildungstemperatur (MFT) unter 40°C aufweisen und aus Domänen von drei Additionspolymeren bestehen, nämlich

 - Polymer A, das eine Glasübergangstemperatur ($T_{gA}$) von -70°C bis 0°C aufweist und 5 bis 70 Gew -% des gesamten Polymers ausmacht;

- Polymer B, das eine Glasübergangstemperatur ($T_{gB}$) von 1 bis 40°C aufweist und 5 bis 70 Gew.-% des gesamten Polymers ausmacht; und
- Polymer C, das eine Glasübergangstemperatur ($T_{gC}$) von 41 bis 150°C aufweist und 5 bis 70 Gew.-% des gesamten Polymers ausmacht,

wobei das gesamte Polymer 100% darstellt.

**8.** Beschichtungszusammensetzung nach Anspruch 7, in der:

- die Glasübergangstemperatur des Polymers A -35 bis 0°C beträgt;
- die Glasübergangstemperatur des Polymers B 5°C bis 35°C beträgt und
- die Glasübergangstemperatur des Polymers C 60 bis 135°C beträgt.

**9.** Beschichtungszusammensetzung nach Anpruch 7 oder 8, in der die Polymerteilchen eine mittlere Größe von 50 bis 250 nm aufweisen.

**10.** Beschichtungszusammensetzung nach einem der Ansprüche 7 bis 9, in der es sich bei den Additionspolymeren um Polymere aus einem oder mehreren (Meth)acrylatestern und/oder vinylaromatischen Kohlenwasserstoffen handelt.

**11.** Beschichtungszusammensetzung nach einem der Ansprüche 7 bis 10, in der das Polymer der Dispersion eine MFT von 5°C oder weniger aufweist.

**12.** Beschichtungszusammensetzung nach einem der Ansprüche 7 bis 11, in der das Polymer der Dispersion eine MFT von 5 bis 40°C aufweist und außerdem auch noch ein Koaleszenzmittel enthält.

**Revendications**

**1.** Dispersion aqueuse de polymère contenant des particules de polymères formées de trois domaines de polymères et préparées par un procédé de polymérisation en émulsion à étapes multiples, les particules de polymères de la dispersion ayant une température filmogène minimum (MFT) inférieure à 40°C et consistant en domaines de trois polymères d'addition, à savoir :

- le polymère A ayant une température de transition vitreuse ($T_{gA}$) de -70°C à 0°C et formant de 5 à 70% en poids du polymère total ;
- le polymère B ayant une température de transition vitreuse ($T_{gB}$) de 1°C à 40°C et formant de 5 à 70% en poids du polymère total ; et
- le polymère C ayant une température de transition vitreuse ($T_{gC}$) de 41°C à 150°C et formant de 5 à 70% en poids du polymère total,

le polymère total représentant 100%.

**2.** Dispersion selon la revendication 1, dans laquelle :

- la température de transition vitreuse du polymère A est de -35°C à 0°C ;
- la température de transition vitreuse du polymère B est de 5°C à 35°C ;
- la température de transition vitreuse du polymère C est de 60°C à 135°C.

**3.** Dispersion selon la revendication 1 ou la revendication 2, dans laquelle les particules de polymères ont une taille moyenne de 50 à 250 nm.

**4.** Dispersion selon l'une quelconque des revendications 1 à 3, dans laquelle les polymères d'addition sont des polymères d'un ou plusieurs esters de (méth)acrylates et/ou des hydrocarbures vinyliques aromatiques.

**5.** Dispersion selon l'une quelconque des revendications 1 à 4, dont le polymère a une MFT de 5°C ou moins.

**6.** Dispersion selon l'une quelconque des revendications 1 à 4, dont le polymère a une MFT de 5°C à 40°C.

7. Composition de revêtement comprenant une dispersion de polymères contenant des particules de polymères formées de trois domaines de polymères et préparées par un procédé de polymérisation en émulsion à étapes multiples, les particules de polymères de la dispersion ayant une température filmogène minimum (MFT) inférieure à 40°C et consistant en domaines de trois polymères d'addition, à savoir :

- le polymère A ayant une température de transition vitreuse ($T_{gA}$) de -70°C à 0°C et formant de 5 à 70% en poids du polymère total ;
- le polymère B ayant une température de transition vitreuse ($T_{gB}$) de 1°C à 40°C et formant de 5 à 70% en poids du polymère total ; et
- le polymère C ayant une température de transition vitreuse ($T_{gC}$) de 41°C à 150°C et formant de 5 à 70% en poids du polymère total,

le polymère total représentant 100%.

8. Composition de revêtement selon la revendication 7, dans laquelle :

- la température de transition vitreuse du polymère A est de -35°C à 0°C ;
- la température de transition vitreuse du polymère B est de 5°C à 35°C ;
- la température de transition vitreuse du polymère C est de 60°C à 135°C.

9. Composition de revêtement selon la revendication 7 ou la revendication 8, dans laquelle les particules de polymères ont une taille moyenne de 50 à 250 nm.

10. Composition de revêtement selon l'une quelconque des revendications 7 à 9, dans laquelle les polymères d'addition sont des polymères d'un ou plusieurs esters de (méth)acrylates et/ou des hydrocarbures vinyliques aromatiques.

11. Composition de revêtement selon l'une quelconque des revendications 7 à 10, dans laquelle le polymère de la dispersion a une MFT de 5°C ou moins.

12. Composition de revêtement selon l'une quelconque des revendications 7 à 11, dans laquelle le polymère de la dispersion a une MFT de 5°C à 40°C et contient aussi un agent coalescent.